# EUROPÄISCHE PATENTSCHRIFT

(11) **EP 0 707 613 B1**
(45) Veröffentlichungstag und Bekanntmachung des Hinweises auf die Patenterteilung: **05.11.1997**
(21) Anmeldenummer: 94919646.3
(22) Anmeldetag: 20.06.1994
(51) Int. Cl.: C08J 11/00, C09D 7/00, B05B 15/12

(54) **VERFAHREN ZUR SPRITZLACKIERUNG MIT WÄSSRIGEN LACKEN**
SPRAY PAINTING PROCESS WITH AQUEOUS LACQUERS
PROCEDE DE PEINTURE AU PISTOLET AVEC DES VERNIS AQUEUX

(30) Priorität: 09.07.1993 DE 4322972
(43) Veröffentlichungstag der Anmeldung: 24.04.1996
(73) Patentinhaber: BASF Lacke und Farben AG, 48165 Münster (DE)
(72) Erfinder: GROSS, Lutz-Werner, D-45721 Haltern (DE); WEGNER, Egon, D-48143 Münster (DE); CHMIELEWSKI, Dietmar, D-48165 Münster (DE)
(86) Internationale Anmeldenummer: EP9402011
(87) Internationale Veröffentlichungsnummer: WO9502010

(56) Entgegenhaltungen:
- DE-A- 4 138 088
- JOURNAL FüR OBERFLÄCHENTECHNIK (JOT), Bd.33, Nr.3, 1993, GERMANY SUTTER H. 'Wasselackrecycling bei der Spritzlackierung. Teil 2: Rückgewinnung bei Farbton- und Qualitätswechsel' in der Anmeldung erwähnt
- JOURNAL FÜR OBERFLÄCHENTECHNIK (JOT), Bd.32, Nr.10, 1992, GERMANY SUTTER H. 'Wasserlackrecycling bei der Spritzlackierung. Teil 1: Ruckgewinnung über Ultrafiltration' in der Anmeldung erwähnt
- JOURNAL FÜR OBERFLÄCHENTECHNIK (JOT), Bd.32, Nr.3, 1992, GERMANY HALBARTSCHLAGER J. 'Neuester Stand beim Wasselack-Recycling'
- JOURNAL FüR OBERFLÄCHENTECHNIK (JOT), Bd.33, Nr.3, 1993, GERMANY SUTTER H. 'Wasselackrecycling bei der Spritzlackierung. Teil 2: Rückgewinnung bei Farbton- und Qualitätswechsel'
- JOURNAL FÜR OBERFLÄCHENTECHNIK (JOT), Bd.32, Nr.10, 1992, GERMANY SUTTER H. 'Wasserlackrecycling bei der Spritzlackierung. Teil 1: Ruckgewinnung über Ultrafiltration'

## Beschreibung

Die Erfindung betrifft ein Verfahren zur Spritzlackierung mit wäßrigen Lacken, bei dem in ein und derselben Lackieranlage mehrere wäßrige Lacke mit unterschiedlichen Farbtönen verarbeitet werden und der nicht auf dem zu lackierenden Substrat aufgekommene Lack (Overspray) mit Wasser aus der Abluft der Lackieranlage aus - und von den mit Overspray in Berührung kommenden Teilen der Lackieranlage abgewaschen wird und das mit Overspray angereicherte Wasser aufkonzentriert und als zurückgewonnener wäßriger Lack, gegebenenfalls nach Zumischung von neu zugeführtem Lack (Frischlack) dem Lackierprozeß wieder zugeführt wird.

Bei der Spritzlackierung mit wäßrigen Lacken wird der nicht auf dem zu lackierenden Substrat aufgekommene Lack (Overspray) mit Wasser aus der Abluft der Lackieranlage aus - und von den mit Overspray in Berührung kommenden Teilen der Lackieranlage abgewaschen. Dabei fällt mit Overspray angereichertes Wasser an, das entsorgt werden muß. Dazu wird der Overspray aus dem mit Overspray angereicherten Wasser ausgefällt. Auf diese Weise entsteht Lackschlamm, der nur in begrenztem Umfang zu anderen Produkten aufgearbeitet werden kann und in vielen Fällen als Abfall entsorgt werden muß.

Als Alternative wurden Verfahren zur Rückgewinnung des Oversprays aus mit Overspray angereichertem Wasser vorgeschlagen, bei denen das mit Overspray angereicherte Wasser so weit aufkonzentriert wird, bis die Feststoffkonzentration des ursprünglich eigesetzten wäßrigen Lackes wieder erreicht wird. Der so erhaltene zurückgewonnene wäßrige Lack kann direkt oder nach Vermischen mit neu zugeführtem Lack (Frischlack) dem Lackierprozeß wieder zugeführt werden (vgl. beispielsweise Journal für Oberflächentechnik (JOT), 1992, Heft 10, S. 32 bis 38).

Dieses Verfahren ist gut geeignet, wenn über längere Zeiträume ein Lack in einem Farbton verarbeitet wird. In der Praxis - insbesondere beim Lackieren von Automobilkarosserien - ist jedoch ein häufiger Wechsel in den Farbtönen der eingesetzten Lacke notwendig. Der zurückgewonnene Lack weist dann einen sich unter Umständen ständig verändernden Mischfarbton auf, je nach Farbton und Menge der verarbeiteten Lacke. Bisher wurden aus Anlagen, in denen Lacke mit unterschiedlichen Farbtönen verarbeitet werden, zurückgewonnene, einen Mischfarbton aufweisende Lacke zur Lackierung von im allgemeinen nicht sichtbaren Bereichen der zu lackierenden Substrate eingesetzt. Diese Lösung des Problems ist unbefriedigend, weil in der Regel - wenn überhaupt - nicht die gesamte in einer Lackieranlage anfallende Menge an zurückgewonnenem Lack auf diese Weise verbraucht werden kann. Die verbleibende Menge an zurückgewonnenem Lack muß dann nachteiligerweise entweder in anderen Lackieranlagen verarbeitet werden, wie im Journal für Oberflächentechnik (JOT), 1993, Heft 3, auf den Seiten 27, 30 und 31 beschrieben durch Mikrofiltration entpigmentiert oder gar als nicht verwertbarer Abfall entsorgt werden. Im Journal für Oberflächentechnik (JOT), 1993, Heft 3, Seiten 26 bis 32 wird außerdem vorgeschlagen, Lackieranlagen, in denen der Farbton der verarbeiteten Lacke häufig wechselt, durch Installation von zusätzlichen Arbeitsbehältern, Retentatbehältern und Pumpen zu erweitern, um den Overspray der unterschiedlichen Lacke getrennt verarbeiten zu können. Diese Lösung des Problems ist jedoch nachteiligerweise mit zusätzlichen Kosten verbunden und erfordert darüber hinaus vor jedem Farbtonwechsel eine Reinigung der Lackieranlage.

Die der vorliegenden Erfindung zugrundeliegende Aufgabenstellung besteht in der Bereitstellung eines Verfahrens zur Spritzlackierung der oben beschriebenen Art, das die Nachteile des Standes der Technik nicht bzw. nur in vermindertem Ausmaß aufweist.

Diese Aufgabenstellung konnte überraschenderweise durch ein Verfahren zur Spritzlackierung der oben beschriebenen Art gelöst werden, das dadurch gekennzeichnet ist, daß
(a) die in der Lackieranlage zu lackierenden Substrate in Art und Menge so ausgewählt werden, daß ein Teil der in der Lackieranlage zu lackierenden Substrate mit einer Mischung aus den in der Lackieranlage zu verarbeitenden wäßrigen Lacken mit unterschiedlichen Farbtönen ("Mischlack") lackiert werden kann und
(b) daß die in der Lackieranlage zu lackierenden Substrate in Art und Menge so ausgewählt werden, daß der Anteil der in der Lackieranlage verarbeiteten Gesamtmenge an wäßrigen Lacken mit unterschiedlichen Farbtönen an der in der Lackieranlage insgesamt verarbeiteten Lackmenge (= Summe aus der Gesamtmenge an in der Lackieranlage verarbeiteten wäßrigen Lacken mit unterschiedlichen Farbtönen und der Gesamtmenge an in der Lackieranlage verarbeitetem gegebenenfalls Frischlack enthaltendem, zurückgewonnenem wäßrigen Lack) 10 bis 90, vorzugsweise 30 bis 70, besonders bevorzugt 40 bis 60 Gew.-% beträgt und
(c) daß die in der Lackieranlage zu lackierenden Substrate in Art und Menge so ausgewählt werden, daß das Mengenverhältnis, in dem die wäßrigen Lacke mit unterschiedlichen Farbtönen verarbeitet werden in etwa dem Mengenverhältnis entspricht, in dem die wäßrigen Lacke mit unterschiedlichen Farbtönen in dem unter a) beschriebenen Mischlack enthalten sind und/oder
(d) durch Auswahl des Farbtons des gegebenenfalls zugemischten Frischlackes dafür Sorge getragen wird, daß der zurückgewonnene wäßrige Lack im wesentlichen den gleichen Farbton wie der unter (a) beschriebene Mischlack aufweist.

Mit dem erfindungsgemäßen Verfahren ist es möglich, auch in Lackieranlagen, in denen ein häufiger Wechsel in den Farbtönen der verarbeiteten Lacke notwendig ist, ohne Erweiterung der Lackieranlage und mit einem wesentlich geringeren Aufwand für die Reinigung der Lackieranlage, den zurückgewonnenen wäßrigen Lack vollständig in derselben Lackieranlage zu verwerten.

Verfahren zur Spritzlackierung mit wäßrigen Lacken, bei denen in ein und derselben Lackieranlage mehrere wäßrige Lacke mit unterschiedlichen Farbtönen verarbeitet werden und der nicht auf dem zu lackierenden Substrat aufgekommene Lack (Overspray) mit Wasser aus der Abluft der Lackieranlage aus- und von den mit Overspray in Berührung kommenden Teilen der Lackieranlage abgewaschen wird und das mit Overspray angereicherte Wasser aufkonzentriert und als zurückgewonnener wäßriger Lack, gegebenenfalls nach Zumischung von neu zugeführtem Lack (Frischlack) dem Lackierprozeß wieder zugeführt wird, sind bekannt und werden beispielsweise im Journal für Oberflächentechnik (JOT) 1992, Heft 10, Seite 32 bis 38 und im Journal für Oberflächentechnik (JOT) 1993, Heft 3, Seite 26 bis 32 beschrieben. Hinsichtlich weiterer Informationen zum Stand der Technik, insbesondere hinsichtlich der Aus- bzw. Abwaschung des Oversprays, der Aufkonzentration des mit Overspray angereicherten Wassers und der allgemeinen Ausführung von für die in Rede stehenden Verfahren geeigneten Lackieranlagen wird auf die EP-A-307 047, EP-A-245 863, EP-A-137 877, EP-A-127 685, EP-A-318 827, EP-A-271 015, EP-A-217 212, DE-A-38 00 980 und CH-4615/89-4 verwiesen.

Die Aufkonzentrierung des mit Overspray angereicherten Wassers kann auf verschiedene Art und Weise durchgeführt werden, beispielsweise durch mechanische Abscheidung mit beispielsweise Zentrifugen oder Dekantern, mit Hilfe von Membranverfahren, insbesondere mit Hilfe der Ultrafiltration, mit Hilfe von thermischen Verfahren (z.B. Vakuumverdampfung) oder unter Einsatz der elektrophoretischen Abscheidung oder durch eine Kombination eines oder mehrerer der aufgezählten Verfahren. Die Aufkonzentration des mit Overspray angereicherten Wassers wird vorzugsweise mit Hilfe der Ultrafiltration durchgeführt. Für die Aufkonzentration von mit Overspray angereichertem Wasser geeignete Anlagen sind im Handel, beispielsweise von der Firma Eisenman, Holzgerlingen, BRD erhältlich.

Die erfindungswesentlichen Merkmale des erfindungsgemäßen Verfahren sollen am Beispiel der Lackierung von Automobilkarosserien mit wäßrigen Füllern, die unterschiedliche Farbtöne aufweisen, exemplarisch erläutert werden.

Automobilkarosserien werden üblicherweise lackiert, indem in einem ersten Schritt eine Elektrotauchlackschicht appliziert wird, die nach dem Einbrennen mit einer Füllerschicht überlackiert wird. Die Füllerschicht wird dann eingebrannt oder im noch nicht eingebrannten Zustand mit einer ein- oder mehrschichtigen, insbesondere zweischichtigen Decklackierung überlackiert. Schließlich wird die Decklackierung eingebrannt, wobei in Fällen, in denen die Decklackierung auf die noch nicht eingebrannt Füllerschicht appliziert worden ist, auch die Füllerschicht mit eingebrannt wird.

Die Hauptaufgaben der Füllerschicht bestehen darin, Unebenheiten und Defekte der Elektrotauchlackschicht auszugleichen und die Steinschlagbeständigkeit der Gesamtlackierung zu verbessern.

Oft ist es jedoch erwünscht, die Automobilkarosserien mit Decklackierungen zu versehen, die aufgrund der Art und Menge der eingesetzten Farbpigmente nicht in der Lage sind, bei den üblicherweise angewandten Schichtdicken den Untergrund vollständig abzudecken. In diesen Fällen werden Füller eingesetzt, die ihrerseits einen Farbton aufweisen, der so beschaffen ist, daß die nicht deckende Decklackierung den gewünschten Farbton aufweist. Füller mit an den Farbton der Decklackierung angepaßten Farbtönen werden oft auch deshalb eingesetzt, damit bei Steinschlagschäden die schadhaften Stellen der Lackierung nicht so stark auffallen, wie das bei Füllerschichten der Fall ist, die sich farblich sehr stark von der Farbe des Decklackes unterscheiden. Aufgrund der wechselnden Farben der Decklackierungen muß demnach auch oft der Farbton der eingesetzten Füller variieren.

Art und Anzahl der mit den unterschiedlichen gefärbten Decklacken zu lackierenden Automobilkarosserien wird durch die Marktnachfrage geregelt. Um das erfindungsgemäße Verfahren durchführen zu können, muß in einem ersten Schritt geklärt werden, welche unterschiedlichen Farbtöne die einzusetzenden Füller auf jeden Fall aufweisen müssen. Die Farbtöne der Füller hängen - wie oben dargelegt - von den Farbtönen der gewünschten Decklackierungen ab. Sobald feststeht, wieviele Füller mit unterschiedlichen Farbtönen benötigt werden, welche Farbtöne diese verschieden farbigen Füller aufzuweisen haben und in welchen Mengen die jeweiligen Füller gebraucht werden, wird in einem zweiten Schritt eine Mischung der Füller mit unterschiedlichen Farbtönen hergestellt, wobei die Mischung die Füller mit unterschiedlichen Farbtönen in dem Mengenverhältnis enthält, in dem die verschiedenfarbigen Füller gebraucht werden. Der so erhaltene "Mischfüller" bzw, "Mischlack" wird dann daraufhin geprüft, inwieweit er aufgrund seines Farbtones für eine möglichst große Menge der zu lackierenden Decklacke als Füller einsetzbar ist. Durch Variation der Mengenverhältnisse, in dem die Füller mit unterschiedlichen Farbtönen gemischt werden, kann der Farbton des "Mischfüllers" bzw. "Mischlackes" so lange variiert werden, bis die Menge an zu verarbeitenden Decklacken für die der "Mischfüller" bzw. "Mischlack" aufgrund seines Farbtons einsetzbar ist, möglichst groß ist und gleichzeitig das Mengenverhältnis, in dem die Füller mit unterschiedlichen Farbtönen in dem "Mischfüller" bzw. "Mischlack" enthalten sind, dem Mengenverhältnis, in dem die Füller mit unterschiedlichen Farbtönen gebraucht werden, möglichst nahe kommt.

Für die Durchführung des erfindungsgemäßen Verfahrens ist es weiterhin notwendig, daß die zu lackierenden Substrate - im oben beschriebenen Beispiel die zu lackierenden Automobilkarosserien -die in der in Rede stehenden Lackieranlage lackiert werden sollen, in Art und Menge so ausgewählt werden, daß der Anteil der in der Lackieranlage verarbeiteten Gesamtmenge an wäßrigen Lacken mit unterschiedlichen Farbtönen an der in der Lackieranlage insgesamt verarbeiteten Lackmenge (= Summe aus der Gesamtmenge an in der Lackieranlage verarbeiteten wäßrigen Lacken mit unterschiedlichen Farbtönen und der Gesamtmenge an in der Lackieranlage verarbeitetem gegebenenfalls Frischlack enthaltendem, zurückgewonnenem wäßrigen Lack) 10 bis 90, vorzugsweise 30 bis 70, besonders bevorzugt 40 bis 60 Gew.-% beträgt.

Um den zurückgewonnenen wäßrigen Lack möglichst vollständig wiederverwerten zu können, ist erfindungsgemäß dafür Sorge zu tragen, daß der gegebenenfalls zugemischten Frischlack enthaltende, zurückgewonnene wäßrige Lack im wesentlichen den gleichen Farbton wie der oben beschriebene "Mischlack" (im Beispiel "Mischfüller) aufweist. "Im wesentlichen" soll bedeuten, daß in der Praxis oft mehr oder weniger geringfügige Farbtonabweichungen tolerierbar sind, es ist jedoch bevorzugt, daß der Farbton des zurückgewonnenen wäßrigen Lacks mit dem Farbton des "Mischlackes" übereinstimmt.

Der Farbton des zurückgewonnenen wäßrigen Lacks kann durch Auswahl des Mengenverhältnisses, in dem die wäßrigen Lacke mit unterschiedlichen Farbtönen verarbeitet werden und/oder durch Auswahl des Farbtons des gegebenenfalls zugemischten Frischlackes so beeinflußt werden, daß er im wesentlichen mit dem Farbton des unter (a) beschriebenen Mischlacks übereinstimmt. Die Auswahl des Mengenverhältnisses, in dem die wäßrigen Lacke mit unterschiedlichen Farbtönen verarbeitet werden, geschieht über eine entsprechende Auswahl der in der Lackieranlage zu lackierenden Substrate. Je näher das Mengenverhältnis, in dem die wäßrigen Lacke mit unterschiedlichen Farbtönen verarbeitet werden, dem Mengenverhältnis kommt, in dem die wäßrigen Lacke mit unterschiedlichen Farbtönen in dem unter (a) beschriebenen Mischlack enthalten sind, desto weniger muß durch Zugabe entsprechend getönter Frischlacke korrigiert werden. Die Formulierung "in etwa" ist sinngemäß so zu verstehen wie die oben erläuterte Formulierung "Im wesentlichen". Die Möglichkeiten, den Farbton des zurückgewonnenen wäßrigen Lackes durch Zumischen entsprechend gefärbter Frischlacke an den Farbton des "Mischlackes" anzugleichen werden umso kleiner, je höher der Anteil der in der Lackieranlage verarbeiteten Gesamtmenge an wäßrigen Lacken mit unterschiedlichen Farbtönen an der in der Lackieranlage insgesamt verarbeiteten Lackmenge ist. Das bedeutet, daß mit höher werdendem Anteil der in der Lackieranlage verarbeiteten wäßrigen Lacke mit unterschiedlichen Farbtönen an der in der Lackieranlage insgesamt verarbeiteten Lackmenge die Anpassung des Farbtons des zurückgewonnenen Lacks an den Farbton des Mischlackes in immer höherem Maße über das Mengenverhältnis, in dem die wäßrigen Lacke mit unterschiedlichen Farbtönen verarbeitet werden, erfolgen muß, was bedeutet, daß das Mengenverhältnis, in dem die wäßrigen Lacke mit unterschiedlichen Farbtönen verarbeitet werden, bei höher werdendem Anteil der in der Lackieranlage verarbeiteten wäßrigen Lacke mit unterschiedlichen Farbtönen an der in der Lackieranlage insgesamt verarbeiteten Lackmenge immer weniger vom Mengenverhältnis, in dem die wäßrigen Lacke mit unterschiedlichen Farbtönen im "Mischlack" enthalten sind, abweichen darf.

Das erfindungsgemäße Verfahren wird vorzugsweise zur Lackierung von Automobilkarosserien mit wäßrigen Füllern, die unterschiedliche Farbtöne aufweisen, eingesetzt. Es kann jedoch auch auf alle Spritzlackierungsverfahren mit wäßrigen Lacken angewendet werden, bei denen in ein und derselben Lackieranlage mehrere wäßrige Lacke mit unterschiedlichen Farbtönen verarbeitet werden und der nicht auf dem zu lackierenden Substrat aufgekommene Lack (Overspray) mit Wasser aus der Abluft der Lackieranlage aus- und von den mit Overspray in Berührung kommenden Teilen der Lackieranlage abgewaschen wird und das mit Overspray angereicherte Wasser aufkonzentriert und als zurückgewonnener wäßriger Lack, gegebenenfalls nach Zumischung von neu zugeführtem Lack (Frischlack) dem Lackierprozeß wieder zugeführt wird.

## Patentansprüche

1. Verfahren zur Spritzlackierung mit wäßrigen Lacken, bei dem in ein und derselben Lackieranlage mehrere wäßrige Lacke mit unterschiedlichen Farbtönen verarbeitet werden und der nicht auf dem zu lackierenden Substrat aufgekommene Lack (Overspray) mit Wasser aus der Abluft der Lackieranlage aus- und von den mit Overspray in Berührung kommenden Teilen der Lackieranlage abgewaschen wird und das mit Overspray angereicherte Wasser aufkonzentriert und als zurückgewonnener wäßriger Lack, gegebenenfalls nach Zumischung von neu zugeführtem Lack (Frischlack) dem Lackierprozeß wieder zugeführt wird, dadurch gekennzeichnet, daß
(a) die in der Lackieranlage zu lackierenden Substrate in Art und Menge so ausgewählt werden, daß ein Teil der in der Lackieranlage zu lackierenden Substrate mit einer Mischung aus den in der Lackieranlage zu verarbeitenden wäßrigen Lacken mit unterschiedlichen Farbtönen ("Mischlack") lackiert werden kann und
(b) daß die in der Lackieranlage zu lackierenden Substrate in Art und Menge so ausgewählt werden, daß der Anteil der in der Lackieranlage verarbeiteten Gesamtmenge an wäßrigen Lacken mit unterschiedlichen Farbtönen an der in der Lackieranlage insgesamt verarbeiteten Lackmenge (= Summe aus der Gesamtmenge an in der Lackieranlage verarbeiteten wäßrigen Lacken mit unterschiedlichen Farbtönen und der Gesamtmenge an in der Lackieranlage verarbeitetem gegebenenfalls Frischlack enthaltendem, zurückgewonnenem wäßrigen Lack) 10 bis 90 Gew.-% beträgt und
(c) daß die in der Lackieranlage zu lackierenden Substrate in Art und Menge so ausgewählt werden, daß das Mengenverhältnis, in dem die wäßrigen Lacke mit unterschiedlichen Farbtönen verarbeitet werden in etwa dem Mengenverhältnis entspricht, in dem die wäßrigen Lacke mit unterschiedlichen Farbtönen in dem unter a) beschriebenen Mischlack enthalten sind und/oder
(d) durch Auswahl des Farbtons des gegebenenfalls zugemischten Frischlackes dafür Sorge getragen wird, daß der zurückgewonnene wäßrige Lack im wesentlichen den gleichen Farbton wie der unter (a) beschriebene Mischlack aufweist.

2. Verfahren nach Anspruch 1, dadurch gekennzeichnet, daß die wäßrigen Lacke wäßrige Füller für die Lackierung von Automobilkarosserien sind.

3. Verfahren nach Anspruch 1 oder 2, dadurch gekennzeichnet, daß die in der Lackieranlage zu lackierenden Substrate gegebenenfalls mit einer Elektrotauchlackschicht beschichtete Automobilkarosserien sind.

## Claims

1. Process for spray-painting with aqueous paints, in which two or more aqueous paints with different colours are processed in a single coating unit and the paint which has not gone onto the substrate to be painted (overspray) is washed out of the exhaust air from the coating- unit and washed off the parts of the coating unit which come into contact with overspray, using water, and the water in which overspray has accumulated is concentrated and is recycled as recovered aqueous paint, if desired after admixing with newly supplied paint (fresh paint), to the coating operation, characterized in that
(a) the nature and amount of the substrates to be painted in the coating unit are selected such that some of the substrates to be painted in the coating unit can be painted using a mixture of the aqueous paints with different colours ("mixed paint") which are to be processed in the coating unit, and
(b) in that [sic] the nature and amount of the substrates to be painted in the coating unit are selected such that the total amount of aqueous paints of different colours processed in the coating unit, as a proportion of the overall amount of paint processed in the coating unit (= sum of the total amount of aqueous paints with different colours processed in the coating unit and the total amount of recovered aqueous paint which may contain fresh paint and is processed in the (coating unit) is from 10 to 90% by weight, and
(c) in that [sic] the nature and amount of the substrates to be painted in the coating unit are selected such that the proportion in which the aqueous paints of different colours are processed corresponds approximately to the proportional content of the aqueous paints with different colours in the mixed paint described in a), and/or
(d) care is taken, by selecting the colour of the fresh paint which is admixed if desired, to ensure that the recovered aqueous paint has essentially the same colour as the mixed paint described in (a).

2. Process according to Claim 1, characterized in that the aqueous paints are aqueous fillers for the finishing of car bodies.

3. Process according to Claim 1 or 2, characterized in that the substrates to be painted in the coating unit are car bodies which have been coated if desired with an electrodeposition coat.

## Revendications

1. Procédé de laquage par pulvérisation à l'aide de laques aqueuses, lors duquel on met en oeuvre, dans une même et unique installation de laquage, plusieurs laques aqueuses ayant des nuances de couleur différentes, et lors duquel on élimine par lavage, à l'aide d'eau, de l'air de rejet de l'installation de laquage, et des pièces de l'installation de laquage qui entrent en contact avec l'overspray, la laque non fixée par le substrat à laquer (overspray), et lors duquel l'on concentre l'eau enrichie d'overspray, et lors duquel l'on achemine celle-ci à nouveau au procédé de laquage, en tant que laque aqueuse récupérée, le cas échéant après mélange avec de la laque nouvellement fournie (laque fraîche), caractérisé en ce que
(a) les substrats à laquer dans l'installation de laquage sont choisis en nature et en quantité de manière à ce qu'une partie des substrats à laquer dans l'installation de laquage puisse être laquée à l'aide d'un mélange en provenance des laques aqueuses à mettre en oeuvre dans l'installation de laquage, ayant des nuances de couleur différentes ("laque mixte") et
(b) en ce que les substrats à laquer dans l'installation de laquage sont choisis en nature et en quantité de manière à ce que la proportion de la quantité totale mise en oeuvre dans l'installation de laquage, de laques aqueuses ayant des nuances de couleur différentes par rapport à la quantité de laque mise en oeuvre au total dans l'installation de laquage (= somme de la quantité totale des laques aqueuses mises en oeuvre dans l'installation de laquage ayant des nuances de couleur différentes et de la quantité totale de la laque aqueuse récupérée, mise en oeuvre dans l'installation de laquage, contenant, le cas échéant, de la laque fraîche), est de 10 à 90 % en poids et
(c) en ce que les substrats à laquer dans l'installation de laquage sont choisis en nature et en quantité de manière à ce que le rapport de quantités, dans lequel les laques aqueuses ayant des nuances de couleur différentes sont mises en oeuvre, correspond environ au rapport de quantités, dans lequel les laques aqueuses ayant des nuances de couleur différentes sont contenues dans la laque mixte décrite sous le point (a) et/ou
(d) en ce que l'on veille, par le choix de la nuance de couleur de la laque fraîche, ajoutée par mélange le cas échéant, à ce que la laque aqueuse récupérée présente pour l'essentiel la même nuance de couleur que la laque mixte décrite sous le point (a).

2. Procédé selon la revendication 1, caractérisé en ce que les laques aqueuses sont des pigments de charge aqueux pour le laquage de carrosseries d'automobiles.

3. Procédé selon la revendication 1 ou 2, caractérisé en ce que les substrats à laquer dans l'installation de laquage sont des carrosseries d'automobiles éventuellement revêtues d'une couche de laque d'électrodéposition.
